# EUROPÄISCHE PATENTANMELDUNG

(11) **EP 2 116 432 A2**
(43) Veröffentlichungstag der Anmeldung: **11.11.2009**
(21) Anmeldenummer: 09100200.6
(22) Anmeldetag: 25.03.2009
(51) Int. Cl.: B60S 1/34

(54) **Scheibenwischervorrichtung**

(30) Priorität: 09.05.2008 DE 102008001685
(71) Anmelder: Robert Bosch GmbH, 70442 Stuttgart (DE)
(72) Erfinder: Kalchschmidt, Peter, 76646, Bruchsal Untergromb. (DE)

(57) **Zusammenfassung**

Die vorliegende Erfindung betrifft eine Scheibenwischervorrichtung insbesondere für einen Heckscheibenwischer eines Kraftfahrzeuges mit einem Wischermotor mit einer oder mehreren Abtriebswellen (3), einem oder mehreren Wischerarmen (2), die jeweils über einen Befestigungsmechanismus (1) an einem Endabschnitt (3a) der Abtriebswelle (3) befestigbar sind, wobei der Befestigungsmechanismus (1) ein Verbindungsstück (4) aufweist, an dessen einem Ende der Wischerann aufschiebbar ist und an dessen anderem Ende eine komplementär zu dem Endabschnitt (3a) der Abtriebswelle (3) ausgebildete Aussparung (5) vorgesehen ist, in welche die Abtriebswelle (3) zur Befestigung des Befestigungsmechanismus (1) an dem Wischermotor einsteckbar ist, wobei zwischen Verbindungsstück (4) und Endabschnitt (3a) der Abtriebswelle (3) im montierten Zustand eine reibschlüssige Verbindung gebildet ist.

## Beschreibung

Die Erfindung betrifft eine Scheibenwischervorrichtung insbesondere für einen Heckscheibenwischer eines Kraftfahrzeuges mit einem Wischermotor, der eine oder mehrere Abtriebswellen aufweist und mit einem oder mehreren Wischerarmen, die jeweils über einen Befestigungsmechanismus an einem Endabschnitt der Abtriebswelle befestigbar sind.

### Stand der Technik

Scheibenwischervorrichtung der oben genannten Art sind allgemein bekannt und beispielsweise in der DE 10 2006 007 350 A1 beschrieben. Aus diesem Dokument ist ein Scheibenwischer für Kraftfahrzeuge bekannt, die an kegelstumpfförmigen Endabschnitten von Abtriebswellen angebracht sind. Auf dem kegelstumpfförmigen Endabschnitt, der in eine Schraube übergeht, ist eine Rändelung ausgebildet. Die Rändelung des kegelstumpfförmigen Endabschnitts greift in eine kegelstumpfförmige Nabe an einem Ende eines Wischerarmes des Scheibenwischers ein. Die Rändelung hat die Aufgabe, eine Verdrehung des Scheibenwischers relativ zu der Abtriebswelle zu verhindern.

Zur Befestigung des Scheibenwischers an der Abtriebswelle ist an deren aus der Nabe hervorstehenden Ende ein Außengewinde ausgebildet, auf die eine Mutter aufschraubbar ist, so dass sich aufgrund der dabei eingreifenden Rändelungen der Wischerarm nicht mehr relativ zur Abtriebswelle verdrehen kann, da die Nabe des Wischerarmes durch das Anziehen der Mutter in die Rändelung der Abtriebswelle gepresst wird.

Nachteilig an diesem Aufbau ist zum Einen, dass zur Befestigung des Scheibenwischers bei der Endmontage Zusatzteile wie beispielsweise Muttern, Unterlegscheiben und dergleichen durch den Kunden vorgehalten werden müssen. Eine solche Befestigung erfordert ferner einen hohen zeitlichen Aufwand. Bei der Endmontage können Varianzen in der Verbindung entstehen, da jeder Kunde seine eigenen Bauteile und Werkzeuge einsetzt und so auch beispielsweise unterschiedlich große Anzugsmomente während der Montage in die Rändelverbindung eingebracht werden.

Mit der Rändelgeometrie gehen ferner Probleme sowohl bei der Herstellung als auch bei der Kraftübertragung einher. Zum Einen ist die Rändelgeometrie nicht reproduzierbar herstellbar, da durch die zur Einbringung der Rändelung einhergehende Werkstoffbearbeitung unterschiedliche Werkstoffeigenschaften entlang des Bauteils erzeugt werden. Ein weiteres Problem mit einer solchen Rändelung besteht darin, dass über den Rändelkegel sehr hohe Kräfte übertragen werden können, was dazu führen kann, dass bei einer Überschreitung eines zu übertragenden Moments die damit einhergehenden hohen Kräfte in das Wischersystem eingeleitet werden und darin ggf. irreparable Schäden verursachen können. Es besteht somit ein Interesse, sowohl ein minimales Moment für das Wischfeld einstellen zu können als auch ein maximales Moment, um ein Überschreiten der Wischwinkelgrenze, einen sogenannten missuse, auffangen zu können, indem auch das maximal zu übertragene Moment durch das System begrenzt ist. Ein solcher missuse kann beispielsweise auftreten, wenn eine große Kraft auf den Wischerarm einwirkt, wie es z.B. der Fall ist, wenn sich der Wischarm in einer Waschanlage an einer der Waschbürsten verhakt und die Waschbürste an dem Wischerarm zieht, so dass das Gestänge über den vorgesehenen Wischwinkel hinaus herausgedreht wird, oder wenn große Schneemassen vom Dach des Kraftfahrzeuges über die Front- oder Heckscheibe auf den Wischerarm rutschen.

Somit ist es Aufgabe der vorliegenden Erfindung zum Einen, eine Scheibenwischervorrichtung bereitzustellen, die bei möglichst geringer Teilevielfalt einfach herstellbar und montierbar ist.

Zum Anderen ist es Aufgabe der vorliegenden Erfindung, eine Vorrichtung bereitzustellen, welche die Einstellung eines minimalen sowie maximalen Momentes zur Erreichung eines optimalen Wischfeldes bereitzustellen, die eine Beschädigung des Systems durch auf den Wischerarm aufgebrachte äußere Kräfte vermeidet.

### Offenbarung der Erfindung

Diese Aufgabe wird erfindungsgemäß dadurch gelöst, dass der Befestigungsmechanismus ein Verbindungsstück aufweist, an dessen einem Ende der Wischerarm aufschiebbar ist und an dessen anderem Ende eine komplementär zu dem Endabschnitt der Abtriebswelle ausgebildete Aussparung vorgesehen ist, in welche die Abtriebswelle zur Befestigung des Befestigungsmechanismus an dem Wischermotor einsteckbar ist, wobei zwischen Verbindungsstück und Endabschnitt der Abtriebswelle im montierten Zustand eine reibschlüssige Verbindung gebildet ist..

Mit anderen Worten wird durch Vorsehen des Befestigungsmechanismus mit der komplementär zur Abtriebswelle ausgebildeten Aussparung möglich, die Geometrie des Endabschnitts der Abtriebswelle zu vereinfachen, die Nachbearbeitung der Abtriebswelle weitestgehend zu vermeiden und die Montage der Scheibenwischervorrichtung wesentlich zu vereinfachen. Sowohl die Herstellung eines bei einer Rändelkegelverbindung notwendigen Außengewindes als auch der Rändelkegel selbst entfallen vollständig. Statt dessen ist zur Herstellung der Abtriebswelle nunmehr nur noch ein Ablängen der Abtriebswelle notwendig, eine Nachbearbeitung des äußeren Zylinders der Abtriebswelle entfällt.

Ferner ist das maximal übertragbare Moment durch den Reibwert, der sich durch die reibschlüssige Verbindung zwischen Abtriebswelle und Verbindungsstück einstellt, begrenzt, so dass bei Überschreiten eines Maximalwertes das Verbindungsstück auf der Abtriebswelle durchrutscht. Dadurch wird verhindert, dass zu große Kräfte in das System eingeleitet werden, was sonst eine Beschädigung des Systems zur Folge haben könnte.

Eine besonders einfache Form der Befestigung des Wischerarms an dem Befestigungsmechanismus wird dadurch erreicht, dass der Wischerarm in seinem Befestigungsbereich so ausgebildet ist, dass er auf das Verbindungsstück derart aufschiebbar ist, dass sich zwischen Wischerarm und Verbindungsstück eine reibschlüssige Verbindung einstellt.

Zur Vereinfachung der Montage kann in einem Ausführungsbeispiel vorgesehen sein, dass sich die reibschlüssige Verbindung zwischen Verbindungsstück und Abtriebswelle durch die Montage des Wischerarms an dem Befestigungsmechanismus einstellt. Dies kann beispielsweise dadurch erreicht werden, dass die Aussparung in dem Verbindungsstück und der Durchmesser des Endabschnitts der Abtriebswelle so ausgelegt sind, dass sich eine enge Passung einstellt, wobei das vermeintliche Restspiel dadurch im montierten Zustand überwunden wird, dass das Verbindungsstück beim Aufschieben des Wischerarms im Bereich der Aussparung um wenige Mikrometer zusammengedrückt wird. Alternativ ist es natürlich auch möglich, diese Kompression durch Aufschieben eines Ringes auf das Verbindungsstück mit entsprechender Festigkeit und geometrischer Auslegung hervorzurufen.

In einer bevorzugten Ausführungsform ist die reibschlüssige Verbindung zwischen Wischerarm und Verbindungsstück durch zwei komplementär ausgeführte Kegelflächen gebildet, welche im montierten Zustand eine reibschlüssige Verbindung bilden. Dies ermöglicht eine besonders einfache Montage des Wischerarms an dem Verbindungsstück sowie eine homogene Kompression des Verbindungsstücks im Einsteckbereich der Abtriebswelle zur Einstellung der reibschlüssigen Verbindung.

Zur einfachen und reproduzierbaren Positionierung des Wischerarms auf dem Verbindungsstück kann in einem Ausführungsbeispiel das Verbindungsstück einen Vorsprung aufweisen, an dem ein Außengewinde ausgebildet ist, auf das eine Befestigungsmutter aufschraubbar ist. Dies stellt eine besonders einfache Möglichkeit dar, den Wischerarm so auf dem Verbindungsstück vorzubewegen, dass sich eine reibschlüssige Verbindung zwischen Wischerarm und Verbindungsstück zuverlässig einstellt.

Wenn an dem Verbindungsstück ferner ein Anschlag ausgebildet ist, über den der axiale Weg der Befestigungsmutter begrenzbar ist, kann so ein vom Anzugsmoment der Schraube unabhängige Krafteinleitung auf den Wischerarm gewährleistet werden. Dieser Anschlag kann auch verstellbar an dem Verbindungsstück angeordnet sein, um verschiedene Positionen des Wischerarms an dem Verbindungsstück reproduzierbar und somit verschiedene Reibweiter in deren Berührungsbereich und damit auch verschiedene maximal zu übertragene Momente einstellen zu können.

Zur Erhöhung der Flexibilität sowie zum Ausgleich von Herstellungstoleranzen und zur Vereinfachung der Wiederherstellung der lösbaren Fixierung des Wischerarms an dem Verbindungsstück ist in einem Ausführungsbeispiel ein Sicherungsring, insbesondere eine Federscheibe, zwischen Befestigungsmutter und Wischerarm zur Aufbringung einer reproduzierten Kraft auf den Wischerarm zwischengeschaltet.

In einem weiteren Ausführungsbeispiel der vorliegenden Erfindung ist an dem Verbindungsstück eine Anlauffläche vorgesehen, über welche der Weg des Wischerarms auf dem Verbindungsstück axial begrenzbar ist. So kann verhindert werden, dass der Wischerarm zu weit auf das Befestigungsstück aufgeschoben wird oder gar von Letzterem heruntergeschoben wird. Durch Begrenzung des axialen Weges des Wischerarms in Richtung der Abtriebswelle kann ferner eine Begrenzung der auf das Verbindungsstück wirkenden Querkraft und damit der Kompression des Verbindungsstücks erreicht werden, wodurch die zwischen Verbindungsstück und Wischerarm einstellende Normalkraft und damit das Reibmoment begrenzbar wird, Auch diese Anlauffläche kann zur Einstellung verschiedener zu übertragener Momente unabhängig von den auf den Wischerarm wirkenden Kräfte verstellbar ausgeführt sein.

Für den Fall, dass der sich zwischen Verbindungsstück und Abtriebswelle bzw. zwischen Verbindungsstück und Wischerarm einstellende Reibwert, aus dem sich das maximal übertragbare Moment ergibt, nicht ausreichend ist, um ein für den optimalen Wischwinkel notwendiges Moment auch noch bei schneller Fahrt übertragen zu können, können in einem weiteren Ausführungsbeispiel zwischen dem Verbindungsstück und der Abtriebswelle und/oder zwischen dem Verbindungsstück und dem Wischerarm ein reibwertsteigerndes Mittel vorgesehen sein. Dieses reibwertsteigernde Mittel kann sowohl auf der Abtriebswelle oder aber auch an der Aussparung des Verbindungsstücks insbesondere im Berührungsbereich zwischen Aussparung und Abtriebswelle, durch einen aufzutragenden reibwertsteigernden Lack beispielsweise durch Aufsprühen aufgebracht sein.

Natürlich ist es auch möglich, das reibwertsteigernde Mittel zwischen Wischerarm und Verbindungsstück in deren gemeinsamen Berührungsbereich vorzusehen und auf gleiche Weise auf diesen Bereich aufzubringen.

Alternativ kann der Reibwert und damit das daraus resultierende Reibmoment auch durch Veränderung der Oberfläche in der Abtriebswelle und/oder der Aussparung innerhalb des Verbindungsstücks oder aber auch des Berührungsbereichs zwischen Verbindungsstück und Wischerarm gebildet sein. Dies kann beispielsweise durch Flächenbearbeitung wie Aufrauhen oder durch ein Strahlverfahren wie zum Beispiel Sandstrahlen bewirkt werden. Natürlich sind auch Kombinationen aus reibwertsteigernden Schichten und einer Oberflächenbearbeitung denkbar.

In einem weiteren Ausführungsbeispiel ist das reibwertsteigernde Mittel durch eine zwischen Verbindungsstück und Abtriebswelle und/oder zwischen Verbindungsstück und Wischerarm eingesetzten Reibhülse oder einen Reibkegel gebildet. Wird diese Variante gewählt, so ist es relativ einfach, für verschiedene Kraftfahrzeuge mit beispielsweise unterschiedlichen Höchstgeschwindigkeiten gleiche Teile einzusetzen und nur durch Austausch der Reibhülse verschiedene Maximalgrenzen des über den Befestigungsmechanismus maximal zu übertragenden Moments einzustellen.

Ferner ist es möglich, die Reibwerte zwischen Verbindungsstück und Wischerarm und zwischen Verbindungsstück und Abtriebswelle unterschiedlich zu wählen. Dies eröffnet die Möglichkeit, den Ort des Durchrutschens bei Überschreitung des maximal zu übertragenden Momentes festzulegen, indem der Reibwert an dem entsprechenden Verbindungsbereich kleiner gewählt wird. Ist beispielsweise ein Durchrutschen an dem Berührungsbereich zwischen Wischerarm und Verbindungsstück gewünscht, so wird dort ein Reibmoment eingestellt, welches niedriger ist, als das Reibmoment zwischen Verbindungsstück und Abtriebswelle. Umgekehrt wird das Reibmoment zwischen Wischerarm und Verbindungsstück höher gewählt als zwischen Verbindungsstück und Abtriebswelle, wenn ein Durchrutschen im Berührungsbereich zwischen Abtriebswelle und Verbindungsstück gewünscht ist. Das Einstellen des Reibwertes kann ebenfalls entweder durch Flächenbearbeitung, durch Aufbringung von reibwertsteigernden Materialien oder durch Einsetzen verschiedener Reibhülsen oder aber auch Kombinationen daraus erreicht werden.

Hinsichtlich weiterer vorteilhafter Ausführungsform der vorliegenden Erfindung wird auf die Unteransprüche sowie die nachfolgende Beschreibung eines Ausführungsbeispiels anhand der beiliegenden Zeichnungen verwiesen.

### Ausführungsbeispiel

Es zeigt:
- Figur 1: einen Befestigungsmechanismus zur Befestigung eines Wischerarms an eine Abtriebswelle eines Wischermotors einer Scheibenwischervorrichtung;
- Figur 2: einen Befestigungsmechanismus gemäß Figur 1 mit reibwertsteigernden Mitteln; und
- Figur 3: eine alternative Ausführungsform des erfindungsgemäßen Befestigungsmechanismus.

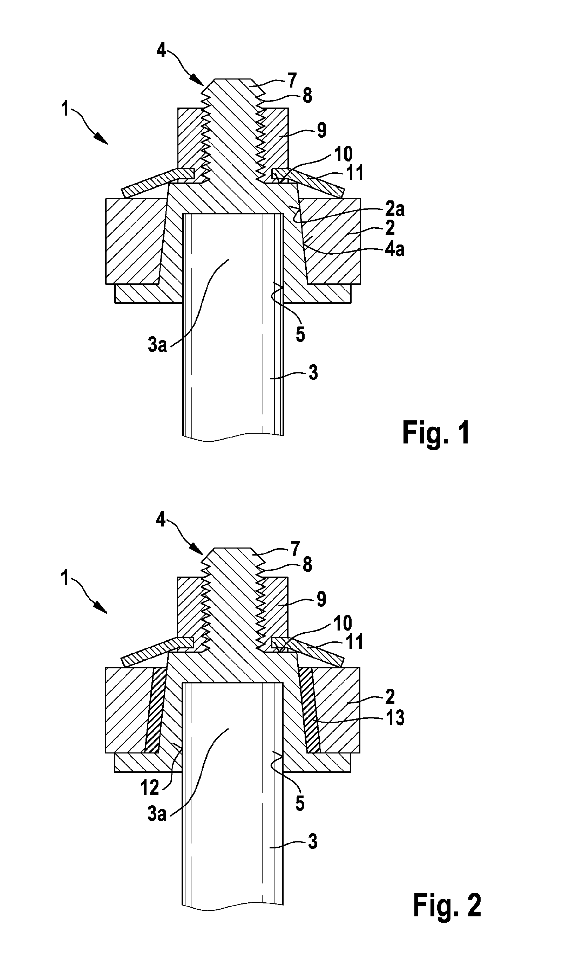

Die Figur 1 zeigt einen Befestigungsmechanismus 1 zur Befestigung eines Wischerarms 2 an einem Endabschnitt einer Abtriebswelle 3 eines nicht weiter im Detail dargestellten Wischermotors einer Scheibenwischervorrichtung.

Der Befestigungsmechanismus 1 weist ein Verbindungsstück 4 auf, in welchem ein komplementär zum Endabschnitt 3a der Abtriebswelle 3 ausgebildeter Einsteckbereich in Form einer Aussparung 5 vorgesehen ist, in die der Endabschnitt 3a eingesetzt ist, wobei sich zwischen Verbindungsstück 4 und dem Endabschnitt 3a der Abtriebswelle 3 im montierten Zustand der Scheibenwischervorrichtung eine reibschlüssige Verbindung einstellt.

Oberhalb dieses Einsteckbereichs ist der Wischerarm 2 an dem Verbindungsstück 4 montiert. Dazu ist das Verbindungsstück 4 im Berührungsbereich mit dem Wischerarm 2 mit einer Keilfläche 4a versehen, die komplementär zu der dem Berührungsbereich zugewandten Keilfläche 2a des Wischerarms 2 ausgebildet ist, so dass sich im montierten Zustand zwischen Wischerarm 2 und Verbindungsstück 4 eine reibschlüssige Verbindung ausbildet.

An der der Aussparung 5 gegenüberliegenden Seite weist das Verbindungsstück 4 einen Vorsprung 7 auf, an dem ein Außengewinde 8 ausgebildet ist, auf das eine Befestigungsmutter 9 aufgeschraubt ist, über welche der Wischerarm 2 in axialer Richtung durch Aufbringen eines Anzugsmoments entlang des Verbindungsstücks 4 in axialer Richtung bewegt und in die gewünschte Position gebracht und in dieser Position fixiert werden kann.

Um den axialen Weg der Befestigungsmutter 9 zu begrenzen und so die auf den Wischerarm 2 wirkenden Kräfte vom Anzugsmoment der Befestigungsmutter 9 zu entkoppeln, und eine reproduzierbare Positionierung des Wischerarms 2 auf dem Verbindungsstück 4 zu ermöglichen, ist in diesem Ausführungsbeispiel ein Anschlag 10 an dem Verbindungsstück 4 vorgesehen. Durch die Beschränkung des axialen Wegs der Befestigungsmutter 9 auf dem Verbindungsstück 4 kann das von außen auf die Befestigungsmutter 9 wirkende Anzugsmoment erhöht werden, ohne dass sich die auf den Wischerarm 2 wirkende axiale Kraft dadurch verändert. Dadurch wird erreicht, dass die Krafteinleitung über die Befestigungsmutter 10 konstant gehalten wird, auch wenn das Anzugsmoment der Befestigungsmutter 9 von Montagevorgang zu Montagevorgang variiert und insbesondere ein maximales Anzugsmoment überschritten wird.

Eine weitere Gewährleistung einer reproduzierbaren Kraft zwischen Verbindungsstück 4 und Wischerarm 2 wird dadurch erreicht, dass ein Sicherungsring in Form einer Federscheibe 12 zwischen der Befestigungsmutter 9 und dem Wischerarm 2 zwischengeschaltet ist, welcher eventuelle Positionierungsschwankungen oder auch Schwankungen, die sich aufgrund von Toleranzen bei der Herstellung ergeben, ausgleichen kann.

Die Figur 2 zeigt einen Befestigungsmechanismus gemäß der Figur 1, bei dem zur Steigerung des Reibwertes zwischen Verbindungsstück 4 und Wischerarm 2 bzw. zwischen Verbindungsstück 4 und Abtriebswelle 3 ein reibwertsteigerndes Mittel vorgesehen sind. Dazu wurde zur Steigerung des Reibwertes und damit des Reibmoments und somit des maximal zu übertragenden Momentes zwischen Verbindungsstück 4 und Abtriebswelle 3 vor der Montage des Befestigungsmechanismus 1 die Abtriebswelle 3 mit einem Reiblack besprüht. Ferner ist zwischen dem Wischerarm 2 und dem Verbindungsstück 4 eine reibwertsteigernde Reibhülse 13 eingesetzt. Natürlich ist es auch denkbar, zwischen Verbindungsstück 4 und Abtriebswelle 3 eine entsprechende Reibhülse einzusetzen. Dabei können die durch die Reibhülsen erzielten Reibwerte abhängig vom gewählten Hülsenmaterial unterschiedlich sein, so dass es möglich ist, durch Wahl des Werkstoffes oder der Werkstoffzusammensetzung auch die bei Überschreitung eines maximal zu übertragenden Momentes gewünschte Position des Durchrutschens festzulegen. So kann es in einem Fall wünschenswert sein, dass das Durchrutschen im Berührungsbereich zwischen Wischerarm 2 und Verbindungsstück 4 auftritt, in einem anderen Fall hingegen zwischen Abtriebswelle 3 und Verbindungsstück 4.

Selbstverständlich muss der Wischerantrieb stabiler ausgelegt sein als das maximal definierte Übertragungsmoment der Reibverbindung zwischen Wischerarm 2 und Verbindungsstück 4 bzw. zwischen Verbindungsstück 4 und Endabschnitt 3a der Abtriebswelle 3, je nach dem welche der Verbindungen den geringeren Reibwert aufweist. Sollte das maximal zu übertragende Moment überschritten worden sein und dadurch ein Durchrutschen der entsprechenden Reibverbindung hervorgerufen worden sein, indem die Verbindung durch die Einwirkung des äußeren Moments gelöst wurde, kann die Verbindung einfach wieder hergestellt werden, indem sie wieder festgezogen wird, nachdem sie wieder in die richtige Position gebracht wurde. Das System ist anschließend wieder voll funktionsfähig. Dadurch ist gewährleistet, dass selbst bei der Einwirkung eines zu großen äußeren Momentes auf den Wischerarm die verschiedenen Teile des Wischerantriebs nicht beschädigt werden können.

Die Montage des Wischerarms 2 an den Befestigungsmechanismus 1 läuft wie folgt ab. Zunächst wird der Endabschnitt 3a der Abtriebswelle 3 in das Verbindungsstück 4 eingesteckt. Der Endabschnitt 3a der Abtriebswelle 3 und die Aussparung 5 in dem Verbindungsstück 4 sind dabei so ausgelegt, dass sich eine enge Passung zwischen Verbindungsstück 4 und Abtriebswelle 3 einstellt. Dann wird der Wischerarm 2 auf das Verbindungsstück 4 aufgeschoben und über die Keilflächen 4a des Verbindungsstücks entlang des Verbindungsstücks 4 nach unten bewegt. Um eine reibschlüssige Verbindung zwischen dem Wischerarm 2 und den Keilflächen 4a des Verbindungsstücks zu erreichen, die dafür sorgt, dass sich eine reibschlüssige Verbindung zwischen dem Verbindungsstück 4 und dem Endabschnitt 3a der Abtriebswelle 3 einstellt, wird die Befestigungsmutter 9 auf den Vorsprung 7 des Verbindungsstücks 4 aufgeschraubt und nach unten bewegt. Die dadurch entstehende axiale Kraftkomponente wird auf der Keilfläche zwischen Wischerarm 2 und Verbindungsstück 4 in eine Querkomponente umgesetzt. Durch diese entsteht eine Normalkraft zwischen dem Verbindungsstück 4 und dem Endabschnitt 3a der Abtriebswelle 3, woraus sich dann ein maximal zu übertragendes Moment zwischen Verbindungsstück 4 und Endabschnitt 3a der Abtriebswelle 3 aus der Formel Mr = µ x F_{N} x r ergibt, wobei der Radius der Abtriebswelle 3 ist und µ der Reibkoeffizient zwischen Abtriebswelle 3 und Aussparung 5. Diese Normalkraft sorgt nämlich dafür, dass das Verbindungsstück im Bereich der Aussparung 5 zusammengedrückt wird, wodurch die Normalkraft zwischen Verbindungsstück 4 und Abtriebswelle 3 ansteigt. Mit anderen Worten kann über die Bewegung des Wischerarms 2 auf dem Verbindungsstück 4 in axialer Richtung die Normalkraft zwischen Verbindungsstück 4 und Abtriebswelle 3 variiert und somit eingestellt werden. Die Befestigungsmutter 9 wird dazu in diesem Ausführungsbeispiel solange auf dem Vorsprung 7 des Verbindungsstücks 4 bewegt, bis es gegen den Anschlag 10 stößt, welcher den axialen Weg begrenzt. Ist der Anschlag 10 erreicht, so kann das Anzugsmoment von außen weiter erhöht werden, ohne dass sich die axiale Kraft von der Federscheibe 12 auf das Verbindungsstück 4 erhöht.

Die Normalkraft F_{N} zwischen Wischerarm 2 und Verbindungsstück 4 kann auch durch Variation der Klemmkegelsteigerung und dem auf die Befestigungsmutter 9 aufgebrachten Anzugsmoment verändert werden, so dass es möglich ist, durch einfaches Austauschen des Verbindungsstückes bzw. Einsetzen von Verbindungsstücken mit verschiedenen Klemmkegelsteigungen unterschiedliche maximal zu übertragende Reibmomente einzustellen.

Zur weiteren Erläuterung der Erfindung soll folgendes Berechnungsbeispiel dienen. Das Übertragungsmoment für eine Verbindung wie in Figur 1 gezeigt lässt sich folgendermaßen ermitteln. Sowohl die Abtriebswelle 3 als auch das Verbindungsstück 4 und der Wischerarm 2 sind aus Stahl gefertigt. Somit ergeben sich an den Reibstellen Abtriebswelle 3 und Verbindungsstück 4 bzw. Verbindungsstück 4 und Wischerarm 2 eine Kombination Stahl/Stahl, welche gefettet ist und mit hoher Oberflächengüte gepaart. Daraus entsteht ein Reibkoeffizient µ von 0,1 bis 0,15. Nun wird beispielhaft eine Normalkraft F_{N} zwischen 66 kN und 105 kN aufgebracht, wobei ein Abtriebswellenradius r = 6 mm angesetzt wird. Daraus ergibt sich ein Übertragungsmomentbereich zwischen 39 Nm und 63 Nm. Dieser Momentenbereich ist aber zu gering, um ein optimales Wischfeld bereitzustellen. Dafür sind Momente > 100 Nm notwendig. Dies kann erreicht werden, indem die einzige variable Größe in der oben stehenden Gleichung entsprechend verändert wird und dazu wie in Figur 2 gezeigt reibwertsteigernde Mittel in den jeweiligen Verbindungsbereichen eingesetzt. Zur Erzielung eines ausreichend großen Momentenbereichs ist es erstrebenswert, einen Reibkoeffizient in den besagten Verbindungen auf einen Wert von µ = 0,15 bis 0,3 einzustellen.

Dies wird in dem Ausführungsbeispiel gemäß Figur 1 zum einen zwischen Endabschnitt 3a der Abtriebswelle 3 und Verbindungsstück 4 dadurch erreicht, dass die Oberfläche des Endabschnitts 3a der Abtriebswelle 3 aufgerauht wird, indem der Endabschnitt sandgestrahlt wird und zum anderen ein reibwertsteigernder Lack 12 in die Aussparung 5 eingebracht wird. In einem weiteren Nicht dargestellten Ausführungsbeispiel wird der Berührungsbereich oberflächengehärtet oder entsprechend beschichtet.

Zum anderen ist in dem Ausführungsbeispiel gemäß Figur 2 zwischen dem Wischerarm 2 und dem Verbindungsstück 4 eine Reibhülse 13 eingesetzt. Der Reibwert, der sich aus der Kombination des sandgestrahlten Endabschnitts 3a der Abtriebswelle 3 mit dem reibwertsteigernden Lack 12 ergibt, ist kleiner als der sich durch die Reibhülse 13 einstellende Reibwert, so dass bei Überschreitung des sich aus dem Reibkoeffizienten zwischen Endabschnitt 3a der Abtriebswelle 3 und Verbindungsstück 4 ergebenden Maximalmoment ein Durchrutschen im Berührungsbereich von Abtriebswelle 3 und Verbindungsstück 4 hervorruft. Um ein Durchrutschen im Bereich der Berührungsfläche zwischen Wischerarm 2 und Verbindungsstück 4 zu erreichen, wird entweder eine Reibhülse mit einem geringeren Reibwert eingesetzt oder aber die Oberflächenbearbeitung an dem Endabschnitt 3a der Abtriebswelle 3 und/oder an der Aussparung des Verbindungsstücks so gewählt, dass ein größeres Reibmoment zwischen letzeren gebildet wird. Alternativ kann auch zwischen Abtriebswelle 3 und Verbindungsstück 4 eine weitere Reibhülse 13 eingesetzt werden, die einen höheren Reibwert aufweist als die Reibhülse 13 zwischen Wischerarm 2 und Verbindungsstück 4 oder aber auch die Reibhülse zwischen Wischerarm 2 und Verbindungsstück 4 entnommen werden.

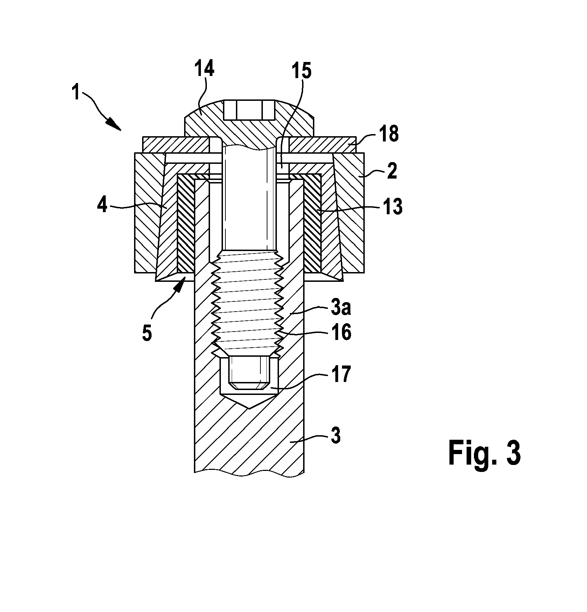

Die Figur 3 zeigt ein alternatives Ausführungsbeispiel eines Befestigungsmechanismus 1, in dem die Befestigung des Verbindungsstücks 4 über ein Befestigungsmittel hier in der Form einer Befestigungsschraube 14 erfolgt. Zur Montage des Verbindungsstücks auf den Endabschnitt 3a der Antriebswelle weist das Verbindungsstück 4 eine Aussparung 5 auf, in die der Endabschnitt 3a der Antriebswelle 3 eingesetzt ist. In dem Verbindungsstück 4 ist eine entsprechend dem Durchmesser der Befestigungsschraube 14 ausgebildete Öffnung 15 vorgesehen, durch die die Befestigungsschraube 14 gesteckt wird, um anschließend in eine mit einem Gewinde 16 versehene in dem Endabschnitt 3a der Antriebswelle 3 ausgebildete Bohrung 17 eingeschraubt zu werden. Zwischen Befestigungsschraube 14 und Verbindungsstück 4 ist in diesem Ausführungsbeispiel eine Druckscheibe 18 vorgesehen, über welche durch Festziehen der Befestigungsschraube 14 sich eine reibschlüssige Verbindung zwischen Wischerarm 2 und Verbindungsstück 4 einstellt, beispielsweise indem das Anzugsmoment der Befestigungsschraube 14 definiert angewendet wird.

Das Vorsehen der Befestigungsschraube 14 zur Befestigung des Verbindungsstücks 4 innerhalb der Bohrung 16 mit einem Gewinde 15 im Bereich unterhalb der Klemmung zwischen Verbindungsstück 4 und Endabschnitt 3a der Antriebswelle 3 bringt den Vorteil mit sich, dass der lange Schaft der Befestigungsschraube 14 eine Dehnung im Hook'schen Bereich erlaubt. Dadurch kann die Gefahr eines Lösens der Befestigungsschraube 14 auch bei wechselnden Belastungen vermindert werden. Durch Verlagerung des Befestigungspunktes in den Endabschnitt 3a der Antriebswelle 3 entfällt ferner der in der Figur 1 gezeigte durch die Befestigungsmutter 11 hervorgerufene hohe Aufbau. Schließlich fällt der Wischerarm 2 selbst bei Lösung der Verbindung zwischen Verbindungsstück 4 und Wischerarm 2 oder Antriebswelle 3 und Verbindungsstück 4 nicht von der Welle, solange die Befestigungsschraube 14 nicht vollständig aus dem Gewinde 15 herausgedreht wird.

## Patentansprüche

1. Scheibenwischervorrichtung insbesondere für einen Heckscheibenwischer eines Kraftfahrzeuges mit
einem Wischermotor mit einer oder mehreren Abtriebswellen (3),
einem oder mehreren Wischerarmen (2), die jeweils über einen Befestigungsmechanismus (1) an einem Endabschnitt (3a) der Abtriebswelle (3) befestigbar sind,
**dadurch gekennzeichnet, dass** der Befestigungsmechanismus (1) ein Verbindungsstück (4) aufweist, an dessen einem Ende der Wischerarm aufschiebbar ist und an dessen anderem Ende eine komplementär zu dem Endabschnitt (3a) der Abtriebswelle (3) ausgebildete Aussparung (5) vorgesehen ist, in welche die Abtriebswelle (3) zur Befestigung des Befestigungsmechanismus (1) an dem Wischermotor einsteckbar ist, wobei zwischen Verbindungsstück (4) und Endabschnitt (3a) der Abtriebswelle (3) im montierten Zustand eine reibschlüssige Verbindung gebildet ist.

2. Scheibenwischervorrichtung nach Anspruch 1, **dadurch gekennzeichnet, dass** der Wischerarm (2) zur Befestigung an dem Befestigungsmechanismus (1) auf das Verbindungsstück (4) derart aufschiebbar ist, dass sich zwischen Wischerarm (2) und Verbindungsstück (4) eine reibschlüssige Verbindung einstellt.

3. Scheibenwischervorrichtung nach Anspruch 1 oder 2, **dadurch gekennzeichnet, dass** sich die reibschlüssige Verbindung zwischen Verbindungsstück (4) und Abtriebswelle (3) durch die Montage des Wischerarms (2) an den Befestigungsmechanismus (1) einstellt.

4. Scheibenwischervorrichtung nach Anspruch 2 oder 3, **dadurch gekennzeichnet, dass** die reibschlüssige Verbindung zwischen Wischerarm (2) und Verbindungsstück (4) durch zwei komplementär ausgebildete Keilflächen (2a, 4a) gebildet ist, welche im montierten Zustand eine Presspassung bilden.

5. Scheibenwischervorrichtung nach einem der vorhergehenden Ansprüche, **dadurch gekennzeichnet, dass** das Verbindungsstück (4) einen Vorsprung (7) aufweist, an dem ein Außengewinde (8) ausgebildet ist, auf das eine Befestigungsmutter (9) zur lösbaren Fixierung des Wischerarms (2) an dem Befestigungsmechanismus (1) auf das Verbindungsstück (4) aufschraubbar ist.

6. Scheibenwischervorrichtung nach Anspruch 5, **dadurch gekennzeichnet, dass** an dem Verbindungsstück (4) ein insbesondere verstellbarer Anschlag (10) ausgebildet ist, über den der axiale Weg der Befestigungsmutter (9) begrenzbar ist.

7. Scheibenwischervorrichtung nach Anspruch 5 oder 6, **dadurch gekennzeichnet, dass** ein Sicherungsring, insbesondere eine Federscheibe (11), zwischen Befestigungsmutter (9) und Wischerarm (2) zur Aufbringung einer reproduzierbaren Kraft zwischengeschaltet ist.

8. Scheibenwischervorrichtung nach einem der vorhergehenden Ansprüche, **dadurch gekennzeichnet, dass** an dem Verbindungsstück (4) eine insbesondere verstellbare Anlauffläche vorgesehen ist, über welche der Weg des Wischerarms (2) auf dem Verbindungsstück (4) begrenzbar ist.

9. Scheibenwischervorrichtung nach einem der vorhergehenden Ansprüche, **dadurch gekennzeichnet, dass** zwischen Verbindungsstück (4) und Abtriebswelle (3) und/oder zwischen Verbindungsstück (4) und Wischerarm (2) zur Einstellung eines zu übertragenden Moments ein reibwertsteigerndes Mittel (12, 13) vorgesehen ist.

10. Scheibenwischervorrichtung nach Anspruch 9, **dadurch gekennzeichnet, dass** das reibwertsteigernde Mittel (12, 13) zumindest teilweise auf die Abtriebswelle (3) und/oder an der Ausssparung (5) des Verbindungsstückes (4) aufgebracht ist.

11. Scheibenwischervorrichtung nach Anspruch 9 oder 10, **dadurch gekennzeichnet, dass** das reibwertsteigernde Mittel durch Veränderung der Oberfläche der Abtriebswelle und/oder der Aussparung innerhalb des Verbindungsstückes gebildet ist.

12. Scheibenwischervorrichtung nach einem der Ansprüche 9 bis 11, **dadurch gekennzeichnet, dass** das reibwertsteigernde Mittel (12, 13) durch eine zwischen Verbindungsstück (4) und Abtriebswelle (3) und/oder zwischen Verbindungsstück (4) und Wischerarm (2) eingesetzte Reibhülse (13) gebildet ist.
